Europäisches Patentamt

European Patent Office

Office européen des brevets

(11) Publication number: 0 508 522 A2

# EUROPEAN PATENT APPLICATION

(21) Application number: 92200898.2

(22) Date of filing: 30.03.92

(51) Int. Cl.5: G11B 7/00, G11B 7/09, G11B 20/10

(30) Priority: 08.04.91 EP 91200809

(43) Date of publication of application:
14.10.92 Bulletin 92/42

(84) Designated Contracting States:
BE DE FR GB IT

(71) Applicant: N.V. Philips' Gloeilampenfabrieken
Groenewoudseweg 1
NL-5621 BA Eindhoven(NL)

(72) Inventor: Bakx, Johannes Leopoldus
c/o INT. OCTROOIBUREAU B.V., Prof.
Holstlaan 6
NL-5656 AA Eindhoven(NL)

(74) Representative: Groenendaal, Antonius
Wilhelmus Maria et al
Internationaal Octrooibureau B.V. Prof.
Holstlaan 6
NL-5656 AA Eindhoven(NL)

(54) Optical recording and/or reading apparatus.

(57) An optical recording and/or reading apparatus for recording and/or reading information in/from a track of an optical record carrier (1) is disclosed. The apparatus comprises a radiation source (6) for generating a radiation beam. The radiation beam is aimed at a radiation-sensitive detector (10) with the aid of an optical system (7,8,9, 11) through the record carrier (1). The detector (10) comprises at least two sub-detectors. A signal processing unit (12) is coupled to outputs of the sub-detectors for receiving detected signals which are indicative of the radiation detected by the sub-detectors. The signal processing unit (12) comprises a means (30a, ..., 30d) for splitting up low-frequency components and high-frequency components of the detection signals. Control signals are derived on the basis of the low-frequency components. The apparatus further includes a means (32) for combining signals which are indicative of the low-frequency components and signals which are indicative of the high-frequency components and for deriving the information signal on the basis of the combined signals.

FIG.3

The invention relates to an optical recording and/or reading apparatus for recording and/or reading information in/from a track of an optical record carrier, this apparatus comprising a radiation source for generating a radiation beam, an optical system for aiming the radiation beam *via* the record carrier at a radiation-sensitive detector which comprises at least two sub-detectors, a signal processing unit coupled to the outputs of the sub-detectors for receiving the detected signals which are indicative of the radiation detected by the sub-detectors, the signal processing unit comprising a means for recovering an information signal indicative of the information recorded in the track on the basis of a signal that is indicative of a sum of detected signals, and for recovering a control signal on the basis of a signal that is indicative of a difference between detected signals.

An apparatus of this type is known from EP-A 0 265 984. The apparatus described in that Patent Application is arranged for recording and reading information in/from a track that presents a track modulation in the form of a so-called track wobble. The frequency of this wobble is modulated in accordance with a DC-free digital address signal. When the track is scanned the radiation beam is modulated by the information pattern and the track wobble. The information signal is recovered from the sum of the detected signals provided by the sub-detectors. The control signals such as, for example, the focus error signal and the radial push-pull signal are recovered from low-frequency components of the differences between the detected signals provided by the sub-detectors. The push-pull signal is used for controlling the velocity and deriving an address signal which denotes the instantaneous scan position. The radial push-pull signal is FM demodulated for obtaining the address signal. The signal powers of the detected signals of the customary sub-detectors are small, so that it is desirable that the detected signals are amplified before the control signals are derived therefrom. Since the control signals are derived from differences between detected signals it is desirable in this respect that low-offset circuits are used for this purpose.

Since the radiation beam is modulated both by the wobbling track and by the information pattern recorded in the track, the deriving of the control signals will be affected by signal components in the detected signals which components correspond to the information pattern. For reliably deriving the control signals, the signal components caused by the information patterns are preferably minimized. For reliably deriving a low-jitter address signal the group delay of the modulated radial push-pull signal is preferably constant for the frequency range which includes the central frequency of the push-pull signal. In practice this means that when there is a central frequency of about 22 kHz the bandwidth of the modulated push-pull signal is about 50 kHz.

Deriving low-jitter information signals from EFM modulated information signals asks for a frequency ranging from several kHz to 1.5 - 2MHz. The requirements to be fulfilled for this range impose that the detected signals are to be converted to low-offset signals which have a bandwidth from 0 to 50 kHz and a wideband signal which has a frequency range from several kHz to 1.5 or 2 MHz, which may be achieved by amplifying the detected signals by means of low-offset wideband amplifiers and thereafter deriving the desired signals from the amplified detected signals by implementing prior-art filter techniques.

However, the objection to this is that such amplifiers are very complex and thus costly.

It is an object of the present invention to provide an apparatus as set out in the opening paragraph in which the control signals and information signals may be derived with the aid of simple circuits.

According to the invention this object is achieved by means of an apparatus characterized in that the signal processing unit comprises a means for splitting up low-frequency components and high-frequency components of the detected signals, a means for deriving the control signal on the basis of the low-frequency components, and a means for combining signals which are indicative of the low-frequency components with signals which are indicative of the high-frequency components and in a means for deriving the information signal on the basis of the combined signals.

Since the low-frequency components are split-up prior to their being processed for the benefit of deriving a control signal, it will be sufficient to process the signals with low-frequency circuits which may be realised in low-offset versions in a relatively simple manner. By adding a signal that corresponds to the low-frequency components to the split-up high-frequency components, there is also achieved that a signal is obtained having a sufficient bandwidth for deriving the information signal.

An embodiment of the apparatus according to the invention is characterized in that the signal processing unit comprises current mirror circuits coupled to the outputs of the sub-detectors, for generating a plurality of interrelated low-frequency signal currents which correspond to the low-frequency components, the control signal deriving means and the information signal deriving means being coupled to the current mirror circuits for receiving the low-frequency signal currents and deriving therefrom the control signal and the information signal.

The use of the current mirror circuits provides in a highly simple and reliable manner a plurality of currents related to the detection signal currents.

The invention is pre-eminently suitable for use in apparatus in which address information is derived from an FM modulated radial push-pull signal because then it is necessary to have the bandwidth overlap of the FM modulated push-pull signal for jitter-free demodulation and the bandwidth necessary for a jitter-free deriving of the information. However, the invention may also be applied to apparatus in which only servo signals for focusing and/or tracking are derived as control signals. In essence, an overlap between the band necessary for deriving the control signals and the band necessary for deriving the information is not required there. However, an overlap enhances the quality of the derived information and control signals there too.

Further embodiments as well as their advantages will be described in detail with reference to the following Figures. 1 to 5, in which:

Fig. 1 shows an embodiment of an optical recording and/or reading apparatus;

Fig. 2 shows a top plan view of the radiation-sensitive detector to be used in the apparatus shown in Fig. 1;

Fig. 3 shows an embodiment of a signal processing unit to be used in the apparatus shown in Fig. 1;

Fig. 4 shows an embodiment of a signal splitting circuit to be used in the signal processing unit shown in Fig. 3; and

Fig. 5 shows an embodiment of a circuit to be used in the signal processing unit shown in Fig. 3.

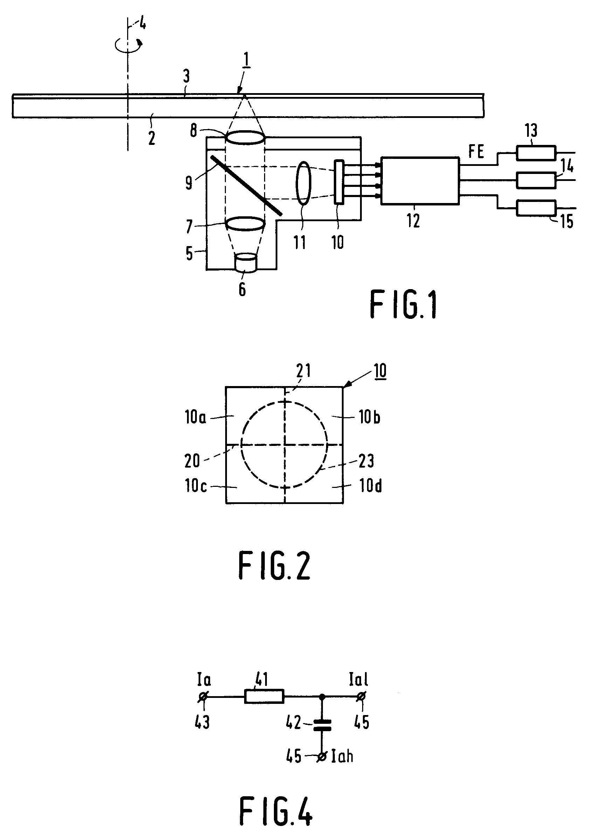

In Fig. 1 the reference numeral 1 denotes a writable optical record carrier of a current type as described in detail, for example, in EP-A 0 265 984, which Patent Application is considered to be included in this description by reference. The record carrier comprises a transparent substrate 2 accommodating a structure of tracks deposited essentially concentrically relative to one another. The track presents a radial wobble whose frequency is modulated in accordance with a DC-free digital address signal. On the substrate is deposited a radiation-sensitive layer 3 in the form of, for example, a radiation-sensitive dye layer or a so-called phase-change layer. The record carrier 1 is driven with customary means and rotates around an axis 4. Opposite to the rotating record carrier 1 is disposed an optical read/write head 5 of a customary type, with which information patterns can be introduced in the track in the radiation-sensitive layer or read from the track. The read/write head 5 comprises a radiation source 6 in the form of, for example, a semiconductor laser. The radiation source 6 generates a radiation beam which is focused on the layer 3 by means of an optical system comprising a lens 7 and a focusing objective 8. The radiation beam reflected by the layer 6 is projected on a radiation-sensitive detector 10 through a beam splitter 9, for example, a semi-transparent mirror. In the optical path, for example, between the beam splitter 9 and the detector 10, an astigmatic element 11 may be disposed for determining a focus error. The detector 10 is divided into sub-detectors at least according to a line 20 (cf. Fig. 2) having a direction that corresponds to the direction of the track. Such a detector may consist of a so-called four-quadrant detector which, in addition to being divided along the line 20, is also divided along a line 21 which has a direction corresponding to a direction perpendicular to the tracks, also termed radial direction.

Fig. 2 shows a top plan view of a four-quadrant detector of this type. In this detector the sub-detectors are denoted by reference characters 10a, 10b, 10c and 10d. The stain caused by the radiation beam on the detection surface is referenced 23. Each of the sub-detectors customarily comprises a radiation-sensitive semiconductor diode which produces a detection current that is indicative of the radiation power of the radiation detected by the sub-detector. The detection currents produced by the sub-detectors will henceforth be denoted Ia, Ib, Ic and Id. The detection currents 1a, ..., 1d are applied to a signal processing unit 12. The signal processing unit derives from the detection currents 1a, ..., 1d produced by the sub-detectors control signals in the form of a focus error signal FE, a radial push-pull signal ATRP and an information signal HF.

The focus error signal is derived from the low-frequency components of the detected signals and is proportional to the low-frequency component of the difference between the sum of the radiation detected by the sub-detectors 10a and 10d and the sum of the radiation detected by the sub-detectors 10b and 10c. The bandwidth of the focus error signal generally has a magnitude comprised between 4 and 10 kHz. The focus error signal FE is applied to a control circuit 13 by means of which the focus error is zeroed in a customary fashion. The radial push-pull signal is derived from the detector currents and is an indication for the difference between the radiation detected by the sub-detectors 10a and 10b and the radiation detected by the sub-detectors 10c and 10d. The radial push-pull signal ATRP is also frequency modulated as a result of the frequency modulated track wobble. By means of an FM demodulator 14 the address signal can be recovered from the signal ATRP. The central frequency of the radial push-pull signal is determined by the scanning velocity of the track and the average period of time of a wobble. With customary values for the scanning velocity and of the track wobble period the central frequency assumes a value corresponding to 22 kHz. For a low-jitter address signal the group delay of the signal ATRP around the central frequency is preferably constant, which implies that the frequency spectrum of the address signal is to range to about 50 kHz.

The information signal HF is also derived from the detection currents Ia, ..., Id and is indicative of the sum of the radiation detected by the four sub-detectors 10a, ..., 10d. The information signal HF is applied to a circuit 15 for recovering the recorded information from the information signal. In the case where the information has been recorded in accordance with a CD standard, the circuit 15 will comprise a so-called EFM demodulator. For obtaining a low-jitter demodulated signal the frequency spectrum of the information signal is preferably to range from several kHz to 1.5 or 2 MHz.

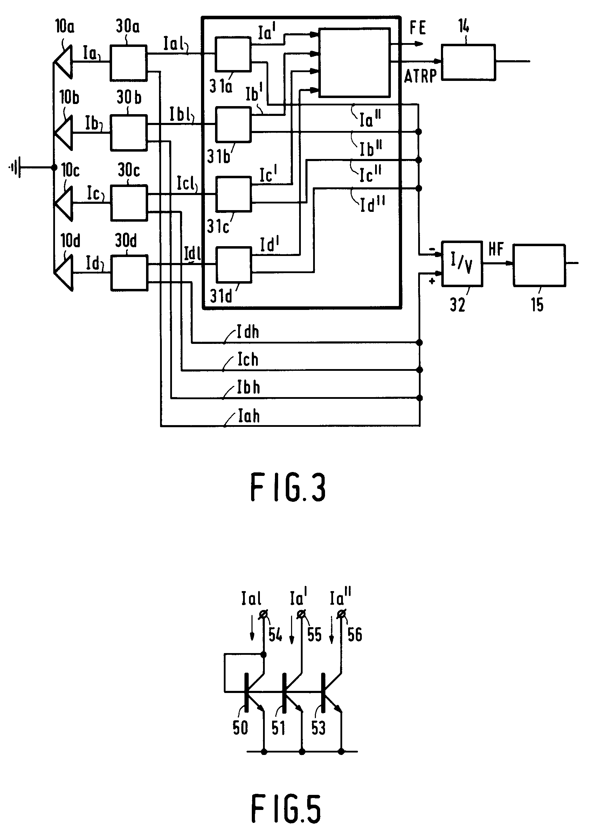

Fig. 3 shows an embodiment of the signal processing unit 12. In this embodiment the detection currents Ia, ..., Ib are applied to the respective signal splitting circuits 30a, ..., 30d. The signal splitting circuits are arranged for splitting up the low-frequency signal components (having a frequency from 0 - 50kHz) and high-frequency signal components (having a frequency from 50kHz - 2MHz) of the detection currents Ia, ..., Id. The low-frequency signal components delivered by the signal splitting circuits 30a..., 30d are referenced Ial, ..., Idl. The high-frequency signal components of the detection currents are referenced Iah, ..., Idh respectively.

The signal splitting circuits are preferably constituted by passive filters of which an extremely simple embodiment is represented in Fig. 4. This embodiment comprises a series combination of a resistor 41 and a capacitor 42. The end of the resistor is used as an input terminal 43 for receiving the detection current Ia. The other end of the resistor is connected to the capacitor 42. The junction point between the resistor 41 and the capacitor 42 is connected to a terminal 44 for delivering the low-frequency component Ial of the detection current Ia. The end of the capacitor 42 not connected to the resistor 41 is used as a terminal for delivering the high-frequency component Iah of the detection current.

The low-frequency components Ia, ...,Id are applied to the respective circuits 31a, ..., 31d.

Each of the circuits 31a, ..., 31d is arranged for delivering signal currents which are proportional to the received low-frequency components of one of the detection currents. In the embodiment shown each of the circuits 31, ..., 31d produces two signal currents which are referenced Ia', ..., Id' and Ia'', ..., Id''.

The signals Ia', ..., Id' are proportional to Ial, ..., Idl, whereas the signal currents Ia'', ..., Id'' are preferably substantially equal to the signal currents Ial, ..., Idl.

Highly advantageous embodiments of the circuits may be realised with the aid of current mirror circuits.

Fig. 5 shows the principle of an embodiment of circuit 31a devised with the aid of current mirror circuits. The embodiment shown comprises three transistors, whose bases are connected to a first common junction and whose emitters are connected to a second common junction. The collector of transistor 50 is likewise connected to the common junction of the bases. The collector of transistor 50 is also connected to a terminal 54 for receiving the signal current Ial. The collector of transistor 51 is connected to a terminal 55 for receiving the signal current Ia'. The collector of transistor 53 is connected to a terminal 56 for receiving the signal current Ia''.

The high-frequency components of the detection currents Iah, ..., Idh and the signal currents Ia'', ..., Id'' are combined in a current-to-voltage converter 32 and converted to the information signal HF whose voltage is proportional to the sum of the low-frequency components of the detected signals and the high-frequency components of the detection currents Ia, ..., Id. The signal currents Ia', ..., Id' are converted in a customary circuit to the signals FE and ATRP, whose voltages satisfy the following equations:

$$FE = K1.(Ia'-Ib'-Ic'+Id')/(Ia'+Ib'+Ic'+Id')$$
$$ATRP = K2.(Ia'+Ib'-Ic'-Id')/(Ia'+Ib'+Ic,+Id')$$

where K1 and K2 are constants.

In the embodiment described hereinbefore the signals FE and ATRP are obtained from the low-frequency components of the detected signals so that low-frequency and thus offset-insensitive circuits will suffice. By again combining the high-frequency components of the detection currents and signal currents which correspond to the low-frequency components of the detection currents, there is also achieved that the frequency spectrum of the information signal comprises both the high-frequency components and the low-frequency components of the detection currents, so that as a result a low-jitter demodulated information signal is obtained.

In addition to a reliable detection of address signals the apparatus according to the invention permits detecting track transitions on the basis of the push-pull signal ATRP, when the read head is displaced with a high velocity in transverse direction relative to the tracks. For that matter, because the bandwidth of this signal is large (± 50kHz) track transitions can still be established at very high velocities. This is contrary to the detection of track transitions in prior-art systems in which the bandwidth of the push-pull signal is much smaller.

## Claims

1. Optical recording and/or reading apparatus for recording and/or reading information in/from a track of an optical record carrier, this apparatus comprising a radiation source for generating a radiation beam, an optical system for aiming the radiation beam *via* the record carrier at a radiation-sensitive detector which comprises at least two sub-detectors, a signal processing unit coupled to the outputs of the sub-detectors for receiving the detected signals which are indicative of the radiation detected by the sub-detectors, the signal processing unit comprising a means for recovering an information signal indicative of the information recorded in the track on the basis of a signal that is indicative of a sum of detected signals, and for recovering a control signal on the basis of a signal that is indicative of a difference between detected signals, characterized in that the signal processing unit comprises a means for splitting up low-frequency components and high-frequency components of the detected signals, a means for deriving the control signal on the basis of the low-frequency components, and a means for combining signals which are indicative of the low-frequency components with signals which are indicative of the high-frequency components and in a means for deriving the information signal on the basis of the combined signals.

2. Apparatus as claimed in Claim 1, characterized in that the splitting means comprises a passive RC filter.

3. Apparatus as claimed in Claim 1 or 2, characterized in that the signal processing unit comprises current mirror circuits coupled to the outputs of the sub-detectors, for generating a plurality of interrelated low-frequency signal currents which correspond to the low-frequency components, the control signal deriving means and the information signal deriving means being coupled to the current mirror circuits for receiving the low-frequency signal currents and deriving therefrom the control signal and the information signal.

4. Apparatus as claimed in one of the preceding Claims, characterized in that the radiation-sensitive detector is divided into sub-detectors along a dividing line that corresponds to the direction of the track on the record carrier, the signal processing unit being arranged for deriving as a control signal a signal which is indicative of the difference between the low-frequency components of the detected signals delivered by the sub-detectors on one side of said dividing line and the low-frequency components of the detected signals delivered by the sub-detectors on the other side of the dividing line, while the apparatus further includes an FM demodulator for performing an FM demodulation of the control signal.

FIG.1

FIG.2

FIG.4

# FIG.3

# FIG.5